# EUROPÄISCHE PATENTANMELDUNG

(11) **EP 4 751 830 A1**
(43) Veröffentlichungstag der Anmeldung: **03.06.2026**
(21) Anmeldenummer: 25216202.9
(22) Anmeldetag: 17.11.2025
(51) Int. Cl.: B23F 21/03, B24D 3/04, B24D 18/00

(54) **HONRING ZUR OBERFLÄCHENBEARBEITUNG EINES VERZAHNTEN WERKSTÜCKS**

(30) Priorität: 26.11.2024 AT 509282024
(71) Anmelder: Tyrolit AG, 6130 Schwaz (AT)
(72) Erfinder: HEINRICH, Bernd, 58809 Neuenrade (DE)
(74) Vertreter: Torggler & Hofmann Patentanwälte - Innsbruck

(57) **Zusammenfassung**

Honring (1) zur Oberflächenbearbeitung eines verzahnten Werkstücks, bevorzugt eines Zahnrades, umfassend zumindest einen Basisring (2) und zumindest ein Schleifmittel (3), wobei eine Verzahnung (4) an einer Innenmantelfläche (5) des zumindest einen Basisrings (2) angeordnet ist, wobei die Verzahnung (4) des zumindest einen Basisrings (2) zumindest bereichsweise, bevorzugt vollständig, mit dem zumindest einen Schleifmittel (3), bevorzugt galvanisch, belegt ist und mit dem verzahnten Werkstück in Kontakt bringbar ist, wobei der zumindest eine Basisring (2) zumindest ein Metall, bevorzugt zumindest zwei oder zumindest drei oder mehrere Metalle, zumindest bereichsweise aufweist oder daraus besteht.

## Beschreibung

Die vorliegende Erfindung betrifft einen Honring zur Oberflächenbearbeitung eines verzahnten Werkstücks, bevorzugt eines Zahnrades, umfassend einen Basisring und ein Schleifmittel.

Weiters betrifft die Erfindung eine Anordnung mit einem solchen Honring, ein Verfahren zur Herstellung eines solchen Honrings und ein Verfahren zur Oberflächenbearbeitung von Werkstücken mit einem solchen Honring.

Honen und Honringe sind beispielsweise aus AT 524577 A4 und AT 522706 A1 bekannt. Es handelt sich beim Honen um eine zerspanende Feinbearbeitung von Werkstücken. Ein Honring kann zur Oberflächenbearbeitung von verzahnten Werkstücken wie Zahnrädern dienen. Solche Honringe weisen einen Basiskörper aus Keramik auf, in den ein Schleifmittel eingebettet ist.

Nachteilig an Honringen des Standes der Technik ist, dass ein hoher Verschleiß auftritt.

Die Aufgabe der vorliegenden Offenbarung besteht also darin, die Nachteile des Standes der Technik zumindest teilweise zu beheben und einen gegenüber dem Stand der Technik verbesserten Honring anzugeben, welcher sich insbesondere durch einen geringeren Verschleiß auszeichnet.

Die Aufgabe besteht weiterhin darin, eine Anordnung mit einem solchermaßen verbesserten Honring, ein Verfahren zum Herstellen eines solchermaßen verbesserten Honrings und ein Verfahren zur Oberflächenbearbeitung von verzahnten Werkstücken mit einem solchermaßen verbesserten Honring anzugeben.

Diese Aufgabe wird gelöst durch die Merkmale der Ansprüche 1, 9, 10 und 15.

Diese Aufgabe wird mittels eines Honwerkzeugs nach Anspruch 1 gelöst, nämlich mit einem Honring zur Oberflächenbearbeitung eines verzahnten Werkstücks, bevorzugt eines Zahnrades, umfassend zumindest einen Basisring und zumindest ein Schleifmittel, wobei eine Verzahnung an einer Innenmantelfläche des zumindest einen Basisrings angeordnet ist, wobei die Verzahnung des zumindest einen Basisrings zumindest bereichsweise, bevorzugt vollständig, mit dem zumindest einen Schleifmittel, bevorzugt galvanisch, belegt ist und mit dem verzahnten Werkstück in Kontakt bringbar ist, wobei der zumindest eine Basisring zumindest ein Metall, bevorzugt zumindest zwei oder zumindest drei oder mehrere Metalle, zumindest bereichsweise aufweist oder daraus besteht.

Dadurch, dass der zumindest eine Basisring zumindest ein Metall aufweist oder daraus besteht, kann die Verzahnung des zumindest einen Basiskörpers elektrochemisch bearbeitet und/oder galvanisch mit dem zumindest einen Schleifmittel belegt werden. Beispielsweise im Gegensatz zu einem keramischen Basiskörper mit eingebettetem Schleifmittel zeigt ein metallischer Basiskörper mit galvanisch belegten Schleifmittel eine höhere Beständigkeit gegen Verschleiß.

Die Möglichkeit der elektrochemischen Bearbeitung und/oder der galvanischen Belegung mit Schleifmittel kann weitere Vorteile wie eine höhere Profilgenauigkeit, eine höhere Standzeit sowie Lebensdauer, eine höhere Zerspannungsleistung und/oder eine höhere Schleifeffizienz ermöglichen.

Eine elektrochemische Bearbeitung kann beispielsweise ein elektrochemisches Abtragen sein, insbesondere zum Entgraten, Elektropolieren und/oder Herstellen der endgültigen Verzahnungsgeometrie.

Eine galvanische Belegung kann als eine elektrochemische Abscheidung bezeichnet werden.

Darunter, dass "die Verzahnung des zumindest einen Basisrings zumindest bereichsweise, bevorzugt vollständig, mit dem zumindest einen Schleifmittel, bevorzugt galvanisch, belegt ist", ist zu verstehen, dass die Verzahnung des zumindest einen Basisrings mit zumindest einem, bevorzugt galvanischen, Belag zumindest bereichsweise, bevorzugt vollständig, versehen ist, wobei der zumindest eine Belag das zumindest eine Schleifmittel aufweist.

In einem Ausführungsbeispiel des Honrings kann vorgesehen sein, dass der Basisring durch Pressen und/oder Sintern aus Metallpulver hergestellt wird. Wenn in diesem Beispiel das Metallpulver vor dem Pressen und/oder Sintern mit Schleifmittel gemischt wird, wird ein Basisring mit darin verteiltem Schleifmittel hergestellt. Demgemäß befindet sich auch ein Teil des Schleifmittels an der Oberfläche des Basisrings und somit auch an der Oberfläche der Verzahnung des Basisrings, womit dieser zumindest bereichsweise mit Schleifmittel belegt ist.

In einem anderen Ausführungsbeispiel des Honrings kann vorgesehen sein, dass der Basisring samt Verzahnung hergestellt wird und anschließend zumindest ein Teil der Verzahnung des Basisrings mit einem Belag versehen wird, wobei der Belag das Schleifmittel aufweist. Ein solcher Belag kann beispielsweise eine Bindung und das Schleifmittel aufweisen. Bekannte Bindungen sind beispielsweise keramische Bindungen oder Kunstharzbindungen. Auf diese Weise kann im Vergleich zum vorigen Ausführungsbeispiel ein großer Anteil an Schleifmittel eingespart werden. Der Belag ist in diesem Beispiel kein inhärenter Bestandteil des Basisrings, sondern ein separater Bestandteil des Honrings.

In einem bevorzugten Ausführungsbeispiel des Honrings kann vorgesehen sein, dass der Basisring samt Verzahnung hergestellt wird und anschließend zumindest ein Teil der Verzahnung des Basisrings mit einem Belag versehen wird, wobei der Belag das Schleifmittel aufweist und galvanisch, mit anderen Worten elektrochemisch, aufgetragen wird. Ein solcher Belag kann beispielsweise eine galvanische Bindung und das Schleifmittel aufweisen. Als galvanische Bindung kann beispielsweise Nickel herangezogen werden. Auf diese Weise kann im Vergleich zum vorigen Ausführungsbeispiel mit einer nichtgalvanischen Bindung eine höhere Profilgenauigkeit, Zerspannungsleistung und/oder Schleifeffizienz des Honrings erreicht werden. Der Belag ist in diesem Beispiel kein inhärenter Bestandteil des Basisrings, sondern ein separater Bestandteil des Honrings.

Es sei an dieser Stelle explizit angemerkt, dass ein lediglich auf der äußeren Oberfläche des Basisrings aufgetragener Belag nicht Teil des Basisrings ist. Wird wie im obigen Ausführungsbeispiel Metallpulver mit Schleifmittel gemischt und anschließend der Basisring hergestellt, so weist der Basisring ein Metall und ein Schleifmittel auf und gleichzeitig ist der Basisring mit einem Schleifmittel belegt. In diesem Fall ist das Schleifmittel ein inhärenter Bestandteil des Basisrings. In den beiden anderen obigen Ausführungsbeispielen weist der Basisring kein Schleifmittel auf, sondern ist nur mit dem Schleifmittel auf seiner Oberfläche belegt. Der das Schleifmittel aufweisende Belag ist kein inhärenter Bestandteil des Basisrings.

In einem bevorzugten Ausführungsbeispiel des Honrings kann vorgesehen sein, dass der Massenanteil an zumindest einem Metall oder zumindest zwei Metallen oder zumindest drei Metallen oder mehreren Metallen oder allen vorhandenen Metallen im Basisring zwischen 90% und 100%, bevorzugt zwischen 95% und 100%, besonders bevorzugt zwischen 99% und 100%, liegt.

In einem Basisring aus zumindest einem, zumindest zwei, zumindest drei oder mehreren Metallen können geringfügige, mitunter nichtmetallische, Verunreinigung enthalten sein.

Eine Fachperson versteht unter "einen aus zumindest einem Metall bestehenden Basisring" oder mit anderen Worten unter "einen Basisring aus zumindest einen Metall", dass der Basisring abgesehen von geringfügigen Verunreinigungen aus dem zumindest einen Metall aufgebaut ist.

Der Vollständigkeit halber wird darauf hingewiesen, dass im Zuge der Beschreibung dieser Offenbarung die verwendeten Zahlwörter wie ein, zwei, drei und dergleichen, grundsätzlich nur die vorhandene Mindestmenge eines Merkmals des offenbarten Honrings beschreiben. Einzelne Merkmale oder Bestandteile können natürlich auch in größerer Anzahl vorhanden sein. So können offenbarte Honringe z.B. mehr als ein Metall, mehr als einen Aufbauring usw. aufweisen. In diesem Sinne ist z.B. also das Zahlwort ein soweit sinnvoll im Sinne von mindestens ein usw. zu verstehen.

Weitere vorteilhafte Ausführungsbeispiele werden in den abhängigen Ansprüchen definiert.

In einem bevorzugten Ausführungsbeispiel des Honrings kann es vorgesehen sein, dass das zumindest eine Metall ein Nichteisenmetall ist.

In einem bevorzugten Ausführungsbeispiel kann vorgesehen sein, dass das zumindest eine Metall kein Eisenmetall ist.

Gemäß einer bevorzugten Ausführungsform des Honrings kann es vorgesehen sein, dass das zumindest eine Metall eine elektrische Leitfähigkeit größer als 1,00·10⁷ S/m, bevorzugt größer als 1,30·10⁷ S/m, besonders bevorzugt größer als 3,00·10⁷ S/m, aufweist.

In einem bevorzugten Ausführungsbeispiel des Honrings kann vorgesehen sein, dass die elektrische Leitfähigkeit des zumindest einen Metalls zwischen 1,00·10⁷ S/m und 10,00·10⁷ S/m, bevorzugt zwischen 3,00·10⁷ S/m und 7,00·10⁷ S/m, besonders bevorzugt zwischen 5,00·10⁻⁷ S/m und 6,50·10⁷ S/m, liegt.

Nachfolgend einige elektrische Leitfähigkeit von Metallen:
- 6,1·10⁻⁷ S/m Silber
- 5,8·10⁻⁷ S/m Kupfer
- 3,7·10⁷ S/m Aluminium
- 1,0·10⁻⁷ S/m Eisen
- 0,9·10⁻⁷ S/m Stahl C35

Durch eine höhere elektrische Leitfähigkeit kann das galvanische Belegen präziser, einfacher und/oder kontrollierbarer durchgeführt werden. Somit ist der Verbund zwischen Basisring und Schleifmittel, seine Festigkeit und/oder seine Verschleißbeständigkeit einstellbar und/oder höher gegenüber bekannten Honringen.

Gemäß einer bevorzugten Ausführungsform des Honrings kann es vorgesehen sein, dass das zumindest eine Metall Aluminium, Kupfer, Zink oder Zinn ist und/oder der zumindest eine Basisring zumindest eine Legierung aufweist oder daraus besteht, wobei die zumindest eine Legierung Bronze, insbesondere Aluminiumbronze, oder Messing ist

Ein Vorteil von Kupfer ist, dass es eine hohe elektrische Leitfähigkeit aufweist, was sich positiv auf die galvanische Belegung auswirkt, besonders wenn es um die galvanische Belegung mit Diamanten geht.

Ein weiterer Vorteil von Kupfer ist, dass Kupfer ein weicheres Metall ist, beispielsweise im Vergleich zu anderen Metallen oder Legierungen wie Stahl. Somit realisiert ein Basisring aus Kupfer einen Dämpfungseffekt, welcher sich positiv auf die Bearbeitbarkeit und den Einsatz des Honrings auswirkt. Beispielsweise ist somit ein einfacheres Einbringen einer Vorverzahnung des Basisrings möglich.

In einem bevorzugten Ausführungsbeispiel des Honrings kann vorgesehen sein, dass im Fall zumindest eines Basisrings umfassend oder bestehend aus zumindest zwei Metallen, zumindest drei Metallen oder mehreren Metallen zumindest eines, zumindest zwei, zumindest drei, mehrere oder alle der vorhandenen Metalle im zumindest einen Basisring
- ein Nichteisenmetall ist und/oder
- eine elektrische Leitfähigkeit größer als 1,00·10⁷ S/m, bevorzugt größer als 1,30·10⁷ S/m, besonders bevorzugt größer als 3,00·10⁷ S/m, aufweist und/oder
- Aluminium, Kupfer, Zink oder Zinn ist und/oder
- eine Legierung aus Bronze, insbesondere Aluminiumbronze, oder Messing ist.

In einem bevorzugten Ausführungsbeispiel des Honrings kann vorgesehen sein, dass der zumindest eine Basisring eine Dichte zwischen 2,0 g/cm³ und 10,0 g/cm³, bevorzugt zwischen 2,7 g/cm³ und 8,6 g/cm³, aufweist

In einem bevorzugten Ausführungsbeispiel des Honrings kann es vorgesehen sein, dass das zumindest eine Schleifmittel Schleifkörner aufweist oder daraus besteht, bevorzugt wobei die Schleifkörner eine Korngröße zwischen 0,035 mm und 0,181 mm, besonders bevorzugt zwischen 0,039 mm und 0,091 mm, ganz besonders bevorzugt von 0,054 mm, und/oder zwischen 57 Mesh und 500 Mesh, besonders bevorzugt zwischen 80 Mesh und 400 Mesh, ganz besonders bevorzugt zwischen 100 Mesh und 139 Mesh, aufweisen.

Schleifkörner mit besagten Korngrößen weisen Vorteile hinsichtlich der Bindungsstärke der galvanischen Belegung und/oder der Verschleißbeständigkeit auf.

Die Korngröße kann in der Maßeinheit mm angegeben werden.

Die Korngröße kann in der Maßeinheit Mesh angegeben werden, welche die Anzahl der Maschen eines Netzes pro Zoll, also 25,4 mm angibt. Je größer die Mesh-Zahl, desto feiner die Körnung.

In einem bevorzugten Ausführungsbeispiel des Honrings kann es vorgesehen sein, dass das zumindest eine Schleifmittel Diamant und/oder Bornitrid, bevorzugt kubisches Bornitrid, kurz CBN, aufweist oder daraus besteht.

Ein mit Diamant und/oder CBN galvanisch belegter Honring verschleißt im Vergleich zu einem Honring aus Keramik weniger oder gar nicht, sodass das Abrichten des Honrings nach einer bestimmten Anzahl an Honvorgängen entfällt.

Der Abrichtprozess unterbricht den Honbetrieb. Somit können mit einem Diamant und/oder CBN galvanisch belegten Honring höhere Stückzahlen pro Zeiteinheit gehont werden. Dies führt zur Zeitersparnis und/oder Kostenersparnis.

Ein weiterer Vorteil von einem mit einem Diamant und/oder CBN galvanisch belegten Honring ist eine höhere Profilgenauigkeit im Vergleich zu einem Honring aus Keramik.

Gemäß einer bevorzugten Ausführungsform des Honrings kann es vorgesehen sein, dass der zumindest eine Basisring in radialer Richtung von zumindest einen Aufbauring umgeben ist, wobei der zumindest eine Aufbauring zumindest ein Kunstharz aufweist oder daraus besteht.

Ein Vorteil des zumindest einen Aufbaurings ist eine im Wesentlichen konstante Schneidkraft während des Honprozesses, die Aufnahme von Kräften sowie die dämpfende Wirkung im Honprozess, insbesondere die Dämpfung von Kraftspitzen, womit Werkzeugbrüche reduziert werden, die Standzeit des Honrings verlängert und das Schleifergebnis verbessert wird.

Unter "Schleifergebnis" kann in diesem Kontext in analoger Betrachtung auch ein Honergebnis des Honrings im Fertigungsverfahren mit geometrisch unbestimmter Schneide zu verstanden werden.

Durch die Kombination der unterschiedlichen Dämpfungswirkungen eines kupferhaltigen Basisrings oder eines Basisrings bestehend aus Kupfer und eines Aufbaurings kann ein synergetischer Dämpfungseffekt erzielt werden.

In einem bevorzugten Ausführungsbeispiel kann vorgesehen sein, dass das zumindest eine Kunstharz vor der Aushärtung zumindest eine der folgenden Materialeigenschaften aufweist:
- eine dynamische Viskosität bei 25 °C zwischen 55 mPas und 85 mPas, bevorzugt 70 mPas,
- eine Dichte bei 20 °C zwischen 1,00 g/cm³ und 1,10 g/cm³, bevorzugt 1,05 g/cm³,
- eine Topfzeit von 200 g und 20 °C zwischen 2,0 min und 4,0 min, bevorzugt zwischen 2,5 min und 3,5 min,
- eine Entformzeit bei Raumtemperatur, bevorzugt bei 20 °C, zwischen 0,25 h und 1,5 h, bevorzugt zwischen 0,5 h und 1 h.

In einem bevorzugten Ausführungsbeispiel kann vorgesehen sein, dass das zumindest eine Kunstharz nach der Aushärtung zumindest eine der folgenden Materialeigenschaften aufweist:
- eine Biegefestigkeit nach EN ISO 178 zwischen 35 MPa und 55 MPa, bevorzugt 45 MPa,
- eine Biegedehnung bei Bruch nach EN ISO 178 zwischen 6,0% und 7%, bevorzugt 6,4%,
- ein Elastizitätsmodul und/oder ein Biegemodul nach EN ISO 178 zwischen 1200 MPa und 1500 MPa, bevorzugt 1350 MPa,
- eine Schlagzähigkeit nach Charpy nach EN ISO 179 zwischen 10 kJ/m² und 20 kJ/m², bevorzugt 15 MPa,
- eine Druckfestigkeit nach EN ISO 604 MPa 35 ± 5 zwischen 25 MPa und 45 MPa, bevorzugt 35 MPa,
- eine Shore Härte nach DIN ISO 7619-1 Shore D 72 ± 3 zwischen 40 MPa und 50 MPa, bevorzugt 45 MPa.

Gemäß einer bevorzugten Ausführungsform des Honrings kann es vorgesehen sein, dass das zumindest eine Kunstharz ein Polyurethan aufweist oder daraus besteht.

Gemäß einer bevorzugten Ausführungsform des Honrings kann es vorgesehen sein, dass das zumindest eine Kunstharz ein 2-Komponenten Kunstharz ist.

Gemäß einer bevorzugten Ausführungsform des Honrings kann es vorgesehen sein, dass das zumindest eine Kunstharz zumindest ein Harz und zumindest einen Härter aufweist oder daraus besteht

In einem bevorzugten Ausführungsbeispiel kann vorgesehen sein, dass das zumindest eine Kunstharz ein Massenverhältnis zwischen dem zumindest einen Harz und dem zumindest einen Härter von 0,1 bis 10, bevorzugt 1, aufweist.

In einem bevorzugten Ausführungsbeispiel kann vorgesehen sein, dass das zumindest eine Harz zumindest eine der folgenden Materialeigenschaften aufweist:
- eine dynamische Viskosität bei 25 °C zwischen 130 mPas und 200 mPas, bevorzugt 165 mPas,
- eine Dichte bei 20 °C zwischen 0,90 g/cm³ und 1,10 g/cm³, bevorzugt 1,00 g/cm³.

In einem bevorzugten Ausführungsbeispiel kann vorgesehen sein, dass das zumindest eine Harz ein Naphthalin und/oder ein Polyol, bevorzugt Bisisopropylnaphthalin CAS 38640-62-9 und/oder Alkylaminopolyoxyalkylenol CAS 25214-63-5, aufweist oder daraus besteht.

In einem bevorzugten Ausführungsbeispiel kann vorgesehen sein, dass der zumindest eine Härter zumindest eine der folgenden Materialeigenschaften aufweist:
- eine Viskosität bei 25 °C zwischen 50 mPas und 70 mPas, bevorzugt 60 mPas,
- eine Dichte bei 20 °C zwischen 1,00 g/cm³ und 1,20 g/cm³, bevorzugt 1,10 g/cm³.

In einem bevorzugten Ausführungsbeispiel kann vorgesehen sein, dass der zumindest eine Härter ein Naphthalin und/oder ein Isocyanat, aufweist oder daraus besteht.

In einem bevorzugten Ausführungsbeispiel kann vorgesehen sein, dass der zumindest eine Härter zumindest
- Bisisopropylnaphthalin CAS 38640-62-9 mit einem Massenanteil im Härter zwischen 25% und 50%,
- Diphenylmethandiisocyanat CAS 9016-87-9 mit einem Massenanteil im Härter zwischen 25% und 50%,
- 4,4'-Methylendiphenyldiisocyanat CAS 101-68-8 mit einem Massenanteil im Härter zwischen 10% und 25%,
- o-p-Isocyanatobenzylphenylisocyanat CAS 5873-54-1 mit einem Massenanteil im Härter zwischen 2,5% und 5%, bevorzugt 2,5% und 4,9%, und/oder
- 2,2'-Methylendiphenyldiisocyanat CAS 2536-05-2 mit einem Massenanteil im Härter kleiner als 0,1%
aufweist oder daraus besteht.

Gemäß einer bevorzugten Ausführungsform des Honrings kann es vorgesehen sein, dass das zumindest eine Kunstharz Füllstoffe aufweist, bevorzugt wobei der Massenanteil der Füllstoffe im Kunstharz zwischen 5% und 65%, besonders bevorzugt zwischen 10% und 50%, liegt.

Durch Füllstoffe können die Eigenschaften des zumindest einen Aufbaurings beeinflusst werden. So kann beispielsweise das Dämpfungsverhalten, die Festigkeit, die Standzeit und/oder andere Eigenschaften des Aufbaurings und/oder des Honrings eingestellt werden.

In einem bevorzugten Ausführungsbeispiel kann vorgesehen sein, dass die Füllstoffe Aluminiumhydroxid aufweisen oder daraus bestehen, bevorzugt wobei der Massenanteil an Aluminiumhydroxid in den Füllstoffen zwischen 50% und 100% liegt und/oder die Dichte des Aluminiumhydroxid zwischen 600 kg/m³ und 2500 kg/m³, besonders bevorzugt von 2420 kg/m³, liegt.

Weiters wird Schutz begehrt für eine Anordnung umfassend einen hier offenbarten Honring zur Oberflächenbearbeitung eines verzahnten Werkstücks, bevorzugt eines Zahnrades, und das verzahnte Werkstück und optional eine Honmaschine zum Einspannen des Honrings.

Weiters wird Schutz begehrt für ein Verfahren zum Herstellen eines hier offenbarten Honrings zur Oberflächenbearbeitung eines verzahnten Werkstücks, bevorzugt eines Zahnrades, oder einer hier offenbarten Anordnung wobei der Honring zumindest einen Basisring und zumindest ein Schleifmittel aufweist, wobei eine Verzahnung an einer Innenmantelfläche des zumindest einen Basisrings angeordnet ist, wobei die Verzahnung des zumindest einen Basisrings zumindest bereichsweise, bevorzugt vollständig, mit dem zumindest einen Schleifmittel, bevorzugt galvanisch, belegt ist und mit dem verzahnten Werkstück in Kontakt bringbar ist, wobei der zumindest eine Basisring mit oder aus zumindest einem Metall, bevorzugt mit oder aus zumindest zwei oder zumindest drei oder mehreren Metallen, hergestellt wird.

Gemäß einer bevorzugten Ausführungsform des Verfahrens kann es vorgesehen sein, dass zumindest einer der folgenden, bevorzugt chronologischen, Verfahrensschritten vorgesehen ist:
- Bereitstellen des zumindest einen Basisrings, wobei der zumindest eine Basisring zumindest ein Metall, bevorzugt zumindest zwei oder zumindest drei oder mehrere Metalle, aufweist oder daraus besteht, wobei eine Verzahnung an einer Innenmantelfläche des zumindest einen Basisrings angeordnet ist und mit dem verzahnten Werkstück in Kontakt bringbar ist,
- Bereitstellen des zumindest einen Schleifmittels,
- Belegen, bevorzugt galvanisches Belegen, der Verzahnung des zumindest einen Basisrings mit dem zumindest einen Schleifmittel.

Gemäß einer bevorzugten Ausführungsform des Verfahrens kann es vorgesehen sein, dass das Bereitstellen des zumindest einen Basisrings zumindest einen, bevorzugt zwei, drei, vier oder mehrere, der folgenden, bevorzugt chronologischen, Verfahrensschritte umfasst:
- Pressen, bevorzugt Heißpressen und/oder Kaltverschweißen, des zumindest einen Basisrings aus Metallpulver,
- Sintern des zumindest einen Basisrings aus Metallpulver,
- Zerspanendes Herstellen des zumindest einen Basisrings aus Metallvollmaterial,
- Zerspanendes Bearbeiten, bevorzugt Drehen des Außendurchmessers, des Innendurchmessers und/oder zumindest einer der beiden Stirnflächen, des zumindest einen Basisrings,
- Einbringen einer Vorverzahnung auf den zumindest einen Basisring, bevorzugt mit einer Profilschleifscheibe,
- Abrichten des zumindest einen Basisrings, bevorzugt mit einem Abrichtrad, besonders bevorzugt mit Diamantbelegung.

Der Einsatz eines Metallpulvers kann verschiedene Vorteile mit sich bringen. Beispielsweise geht die Herstellung eines Basisrings aus Metallpulver mit niederem Beschaffungsaufwand, insbesondere niederen Kosten, als bei Formteilen aus Vollmaterial einher. Weiters entsteht hierbei weniger Abfall bei der Formgebung als bei der Formgebung von Vollmaterial, was ökonomische, ökologische und organisatorische Vorteile bietet.

Gemäß einer bevorzugten Ausführungsform des Verfahrens kann es vorgesehen sein, dass zumindest einer der folgenden, bevorzugt chronologischen, Verfahrensschritten vorgesehen ist:
- Bereitstellen zumindest eines Aufbaurings, wobei der zumindest eine Aufbauring zumindest ein Kunstharz aufweist oder daraus besteht,
- Bereitstellen zumindest eines Trägerrings durch Verbinden des zumindest einen Basisrings mit dem zumindest einen Aufbauring, bevorzugt wobei der zumindest eine Basisring in radialer Richtung von dem zumindest einen Aufbauring umgeben ist,
- Belegen, bevorzugt galvanisches Belegen, des zumindest einen Trägerrings, bevorzugt der Verzahnung des zumindest einen Basisrings des zumindest einen Trägerrings, mit dem zumindest einen Schleifmittel.

Gemäß einer bevorzugten Ausführungsform des Verfahrens kann es vorgesehen sein, dass das Bereitstellen des zumindest einen Aufbaurings und/oder des Trägerrings zumindest einen, zwei, drei oder alle der folgenden, bevorzugt chronologischen, Verfahrensschritte umfasst:
- Anordnen, bevorzugt Zentrieren, des zumindest einen Basisrings in einer Gussform
- Umgießen des zumindest einen Basisrings in radialer Richtung mit einer Kunstharzmasse,
- Aushärten der Kunstharzmasse zu zumindest einem Aufbauring,
- Zerspanendes Bearbeiten, bevorzugt Drehen des Außendurchmessers, des Innendurchmessers und/oder zumindest einer der beiden Stirnflächen, des zumindest einen Aufbaurings und/oder des zumindest einen Trägerrings.

In einem bevorzugten Ausführungsbeispiel des Verfahrens kann es vorgesehen sein, dass das zumindest eine Metall und/oder das Metallpulver und/oder das Metallvollmaterial zumindest ein dendritisches Metall, Aluminium, Kupfer, bevorzugt dendritisches Kupfer, Zink, Zinn, Bronze, bevorzugt Aluminiumbronze, und/oder Messing aufweist oder daraus besteht.

Weiters wird Schutz begehrt für ein Verfahren zur Oberflächenbearbeitung verzahnter Werkstücke mit einem hier offenbarten Honring oder einer hier offenbarten, mit folgenden, bevorzugt chronologischen, Verfahrensschritten:
- Einspannen des Honrings in einer Honmaschine,
- Bearbeiten eines verzahnten Werkstücks, bevorzugt eines Zahnrads, besonders bevorzugt eines Getriebezahnrads, mit dem eingespannten Honring in der Honmaschine.

Weitere Einzelheiten und Vorteile bevorzugter Ausgestaltungsbeispiele werden anhand der Figurenbeschreibung unter Bezugnahme auf die Zeichnungen im Folgenden näher erläutert. Darin zeigen:
- Fig. 1:: eine perspektivische Ansicht eines Ausführungsbeispiels eines Honrings, und
- Fig. 2:: ein schematischer Verfahrensablauf zum Herstellen des Honrings aus Fig. 1.

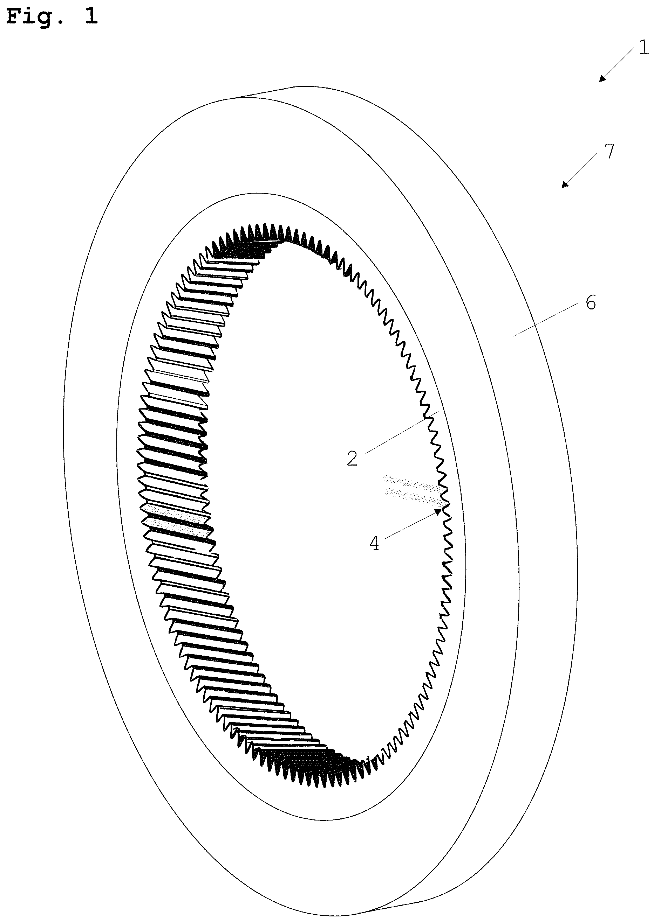

Fig. 1 zeigt eine perspektivische Ansicht eines Ausführungsbeispiels eines Honrings.

Fig. 1 zeigt einen Honring 1 zur Oberflächenbearbeitung eines verzahnten Werkstücks, bevorzugt eines Zahnrades, umfassend zumindest einen Basisring 2 und zumindest ein Schleifmittel 3, wobei eine Verzahnung 4 an einer Innenmantelfläche 5 des zumindest einen Basisrings 2 angeordnet ist, wobei die Verzahnung 4 des zumindest einen Basisrings 2 zumindest bereichsweise, bevorzugt vollständig, mit dem zumindest einen Schleifmittel 3, bevorzugt galvanisch, belegt ist und mit dem verzahnten Werkstück in Kontakt bringbar ist, wobei der zumindest eine Basisring 2 zumindest ein Metall, bevorzugt zumindest zwei oder zumindest drei oder mehrere Metalle, zumindest bereichsweise aufweist oder daraus besteht.

In Fig. 1 ist der Belag mit Schleifmittel nicht ersichtlich.

Der Honring 1 in Fig. 1 weist neben dem Basisring 2 einen Aufbauring 6. Der Basisring 2 und der Aufbauring 7 bilden zusammen einen Trägerring 7.

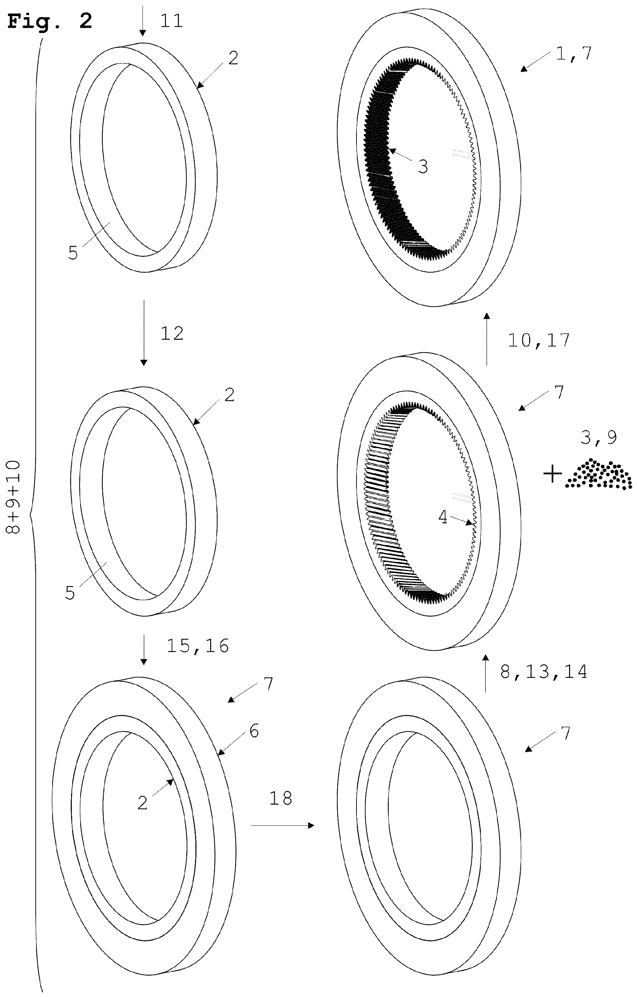

Fig. 2 zeigt einen schematisches Verfahrensablauf zum Herstellen des Honrings aus Fig. 1.

Fig. 2 zeigt ein Verfahren zum Herstellen eines Honrings 1 zur Oberflächenbearbeitung eines verzahnten Werkstücks, bevorzugt eines Zahnrades, wobei der Honring 1 zumindest einen Basisring 2 und zumindest ein Schleifmittel 3 aufweist, wobei eine Verzahnung 4 an einer Innenmantelfläche 5 des zumindest einen Basisrings 2 angeordnet ist, wobei die Verzahnung 4 des zumindest einen Basisrings 2 zumindest bereichsweise, bevorzugt vollständig, mit dem zumindest einen Schleifmittel 3, bevorzugt galvanisch, belegt ist und mit dem verzahnten Werkstück in Kontakt bringbar ist, wobei der zumindest eine Basisring 2 mit oder aus zumindest einem Metall, bevorzugt mit oder aus zumindest zwei oder zumindest drei oder mehreren Metallen, hergestellt wird.

Fig 2 zeigt ein Verfahren mit folgenden, bevorzugt chronologischen, Verfahrensschritten:
- Bereitstellen 8 des zumindest einen Basisrings 2, wobei der zumindest eine Basisring 2 zumindest ein Metall, bevorzugt zumindest zwei oder zumindest drei oder mehrere Metalle, aufweist oder daraus besteht, wobei eine Verzahnung 4 an einer Innenmantelfläche 5 des zumindest einen Basisrings 2 angeordnet ist und mit dem verzahnten Werkstück in Kontakt bringbar ist,
- Bereitstellen 15 zumindest eines Aufbaurings 6, wobei der zumindest eine Aufbauring 6 zumindest ein Kunstharz aufweist oder daraus besteht,
- Bereitstellen 16 zumindest eines Trägerrings 7 durch Verbinden des zumindest einen Basisrings 2 mit dem zumindest einen Aufbauring 6, bevorzugt wobei der zumindest eine Basisring 2 in radialer Richtung von dem zumindest einen Aufbauring 6 umgeben ist,
- Bereitstellen 9 des zumindest einen Schleifmittels 3,
- Belegen 10, bevorzugt galvanisches Belegen, der Verzahnung 4 des zumindest einen Basisrings 2 mit dem zumindest einen Schleifmittel 3 und/oder
- Belegen 17, bevorzugt galvanisches Belegen, des zumindest einen Trägerrings 7, bevorzugt der Verzahnung 4 des zumindest einen Basisrings 2 des zumindest einen Trägerrings 7, mit dem zumindest einen Schleifmittel 3.

Es kann, wie in Fig. 2 dargestellt, vorgesehen sein, dass das Bereitstellen 8 des zumindest einen Basisrings 2 zumindest einen, bevorzugt zwei, drei, vier oder mehrere, der folgenden, bevorzugt chronologischen, Verfahrensschritte umfasst:
- Pressen 11, bevorzugt Heißpressen und/oder Kaltverschweißen, des zumindest einen Basisrings 2 aus Metallpulver,
- Sintern 11 des zumindest einen Basisrings 2 aus Metallpulver,
- Zerspanendes Herstellen 11 des zumindest einen Basisrings 2 aus Metallvollmaterial,
- Zerspanendes Bearbeiten 12, bevorzugt Drehen des Außendurchmessers, des Innendurchmessers und/oder zumindest einer der beiden Stirnflächen, des zumindest einen Basisrings 2,
- Einbringen 13 einer Vorverzahnung auf den zumindest einen Basisring 2, bevorzugt mit einer Profilschleifscheibe,
- Abrichten 14 des zumindest einen Basisrings 2, bevorzugt mit einem Abrichtrad, besonders bevorzugt mit Diamantbelegung.

Es kann, wie teilweise in Fig. 2 dargestellt, vorgesehen sein, dass das Bereitstellen des zumindest einen Aufbaurings 6 und/oder des Trägerrings 7 zumindest einen, zwei, drei oder alle der folgenden, bevorzugt chronologischen, Verfahrensschritte umfasst:
- Anordnen, bevorzugt Zentrieren, des zumindest einen Basisrings 2 in einer Gussform
- Umgießen des zumindest einen Basisrings 2 in radialer Richtung mit einer Kunstharzmasse,
- Aushärten der Kunstharzmasse zu zumindest einem Aufbauring 6,
- Zerspanendes Bearbeiten 18, bevorzugt Drehen des Außendurchmessers, des Innendurchmessers und/oder zumindest einer der beiden Stirnflächen, des zumindest einen Aufbaurings 6 und/oder des zumindest einen Trägerrings 7.

Ein Verfahren zum Herstellen eines Honrings 1 zur Oberflächenbearbeitung eines verzahnten Werkstücks, bevorzugt eines Zahnrades, kann sämtliche Verfahrensschritte wie das Ausführungsbeispiel aus Fig. 2 aufweisen. Dabei soll dieses Ausführungsbeispiel nicht als limitierend verstanden werden. Sämtliche hier offenbarten Verfahrensschritte können in dem Verfahren miteinander kombiniert, ausgetauscht, wiederholt und unterschiedlich chronologisch geordnet werden.

Das Ausführungsbeispiel des Verfahrens aus Fig. 3 kann praktisch wie folgt durchgeführt werden:
Es wird eine Mischung aus Aluminiumpulver mit einer Reinheit von 99% und feinem dendritischem Kupferpulver mit einer Reinheit von 99,9% bereitgestellt. Die Zusammensetzung hiervon kann beispielsweise 6% Aluminium und 94% Kupfer sein.

Durch Heißpressen wird die Mischung aus den beiden Metallpulvern zu einem porösen, festen und stabilen Basisring verdichtet. Die Festigkeit des gebildeten Basisrings beruht ausschließlich auf Formschluss der Pulverpartikel, die über der Fließgrenze verdichtet und ineinander verhakt werden. Technisch gesehen ist der Vorgang ein Kaltverschweißen.

Es sind alle duktilen Metallpulver und/oder Metalllegierungspulver zur Herstellung derartiger fester und stabiler Basisringe verwendbar, beispielsweise Kupferpulver, Kupfer-Aluminiumpulver, Bronzepulver und/oder Messingpulver.

Somit entsteht eine sehr große Vielfalt steuerbarer physikalischer Eigenschaften des festen und stabilen Basisrings wie Dichte, elektrische Leitfähigkeit, Wärmeleitfähigkeit, Wärmekapazität und/oder Temperaturleifähigkeit.

Je nach Zusammensetzung kann eine Dichte zwischen 2,7 g/cm³ und 8,6 g/cm³ eingestellt werden. Die Dichte des festen und stabilen Basisrings mit obiger beispielhafter Zusammensetzung kann 6,6 g/cm³ betragen.

Weiters können mechanischen Größen wie Zähigkeit und/oder Festigkeiten über die Partikelform, Partikelgröße und Verteilung der Metallpulver und/oder der Legierungspulver und/oder Verfahrensparameter wie Pressdruck, -temperatur und/oder -zeit gesteuert werden.

Bei höheren Verarbeitungstemperatur als beim Heißpressen werden Sintertemperaturen erreicht. Somit könnten die Pulver zu stabilen Basisringen versintert werden. Dabei findet ein atomarer Austausch zwischen den sich berührenden Oberflächen der Metallpartikel statt. Mit anderen Worten handelt es sich hierbei um eine Diffusion von Metallatomen aufgrund eines unterschiedlichen elektrochemischen Potentials der Metallpartikel.

Nach der Herstellung des Basisrings kann mittels einer Profilschleifscheibe eine Vorverzahnung auf der Innenmantelfläche eingearbeitet, mittels eines Abrichtrads die Verzahnung fertig gestellt und anschließend die Verzahnung mit dem zumindest einen Schleifmittel, bevorzugt galvanisch, belegt werden.

Zusätzlich kann vor der Belegung oder auch bereits vor der Einarbeitung der Verzahnung und/oder Vorverzahnung ein Aufbauring hergestellt werden. Hierfür kann der Basisring mit einer Kunstharzmasse umgossen werden, welche anschließend aushärtet und somit mit dem Basisring verbunden ist. Das Kunstharz kann ein Harz, einen Härter und optional Füllstoffe aufweisen.

Das Kunstharz kann beispielsweise als Harz SG 140 L weißlich Komp. A von ebalta Kunststoffe GmbH, als Härter PUR 12 braun transparent Komp. B von ebalta Kunststoffe GmbH und als Füllstoff den Füllstoff F-A, F-B, F-G, F-Alu und/oder MF-Paste von ebalta Kunststoffe GmbH aufweisen.

Obwohl die bisherige Beschreibung mit einem gewissen Maß an Ausführlichkeit verfasst wurde, ist zu beachten, dass viele Änderungen an den Details der Konstruktion der Ausführungsbeispiele und der Anordnung ihrer Komponenten vorgenommen werden können, ohne vom grundlegenden Konzept und Umfang dieser Offenbarung abzuweichen. Es versteht sich, dass die Erfindung nicht auf die hier zur Veranschaulichung dargelegten Ausführungsformen beschränkt ist.

Sämtliche beschriebenen Ausführungsbeispiele des Honrings und des Verfahrens können, wenn technisch möglich, miteinander kombiniert werden und/oder durch einzelne Merkmale anderer Ausführungsbeispiele ergänzt werden.

## Patentansprüche

1. Honring (1) zur Oberflächenbearbeitung eines verzahnten Werkstücks, bevorzugt eines Zahnrades, umfassend zumindest einen Basisring (2) und zumindest ein Schleifmittel (3), wobei eine Verzahnung (4) an einer Innenmantelfläche (5) des zumindest einen Basisrings (2) angeordnet ist, wobei die Verzahnung (4) des zumindest einen Basisrings (2) zumindest bereichsweise, bevorzugt vollständig, mit dem zumindest einen Schleifmittel (3), bevorzugt galvanisch, belegt ist und mit dem verzahnten Werkstück in Kontakt bringbar ist, **dadurch gekennzeichnet, dass** der zumindest eine Basisring (2) zumindest ein Metall, bevorzugt zumindest zwei oder zumindest drei oder mehrere Metalle, zumindest bereichsweise aufweist oder daraus besteht.

2. Honring (1) nach Anspruch 1, wobei das zumindest eine Metall eine elektrische Leitfähigkeit größer als 1,00·10⁷ S/m, bevorzugt größer als 1,30·10⁷ S/m, besonders bevorzugt größer als 3,00·10⁷ S/m, aufweist.

3. Honring (1) nach Anspruch 1 oder 2, wobei das zumindest eine Metall Aluminium, Kupfer, Zink oder Zinn ist und/oder der zumindest eine Basisring (2) zumindest eine Legierung aufweist oder daraus besteht, wobei die zumindest eine Legierung Bronze, insbesondere Aluminiumbronze, oder Messing ist.

4. Honring (1) nach einem der vorangegangenen Ansprüche, wobei der zumindest eine Basisring (2) in radialer Richtung von zumindest einen Aufbauring (6) umgeben ist, wobei der zumindest eine Aufbauring (6) zumindest ein Kunstharz aufweist oder daraus besteht.

5. Honring (1) nach dem vorangegangenen Anspruch 4, wobei das zumindest eine Kunstharz ein Polyurethan aufweist oder daraus besteht.

6. Honring (1) nach einem der vorangegangenen Ansprüche 4 oder 5, wobei das zumindest eine Kunstharz ein 2-Komponenten Kunstharz ist.

7. Honring (1) nach einem der vorangegangenen Ansprüche 4 bis 6, wobei das zumindest eine Kunstharz zumindest ein Harz und zumindest einen Härter aufweist oder daraus besteht.

8. Honring (1) nach einem der vorangegangenen Ansprüche 4 bis 7, wobei das zumindest eine Kunstharz Füllstoffe aufweist, bevorzugt wobei der Massenanteil der Füllstoffe im zumindest einen Kunstharz zwischen 5% und 65%, besonders bevorzugt zwischen 10% und 50%, liegt.

9. Anordnung umfassend einen Honring (1) zur Oberflächenbearbeitung eines verzahnten Werkstücks, bevorzugt eines Zahnrades, nach einem der Ansprüche 1 bis 8 und das verzahnte Werkstück und optional eine Honmaschine zum Einspannen des Honrings (1).

10. Verfahren zum Herstellen eines Honrings (1) zur Oberflächenbearbeitung eines verzahnten Werkstücks, bevorzugt eines Zahnrades, bevorzugt nach einem der Ansprüche 1 bis 8 oder einer Anordnung nach Anspruch 9, wobei der Honring (1) zumindest einen Basisring (2) und zumindest ein Schleifmittel (3) aufweist, wobei eine Verzahnung (4) an einer Innenmantelfläche (5) des zumindest einen Basisrings (2) angeordnet ist, wobei die Verzahnung (4) des zumindest einen Basisrings (2) zumindest bereichsweise, bevorzugt vollständig, mit dem zumindest einen Schleifmittel (3), bevorzugt galvanisch, belegt ist und mit dem verzahnten Werkstück in Kontakt bringbar ist, **dadurch gekennzeichnet, dass** der zumindest eine Basisring (2) mit oder aus zumindest einem Metall, bevorzugt mit oder aus zumindest zwei oder zumindest drei oder mehreren Metallen, hergestellt wird.

11. Verfahren nach Anspruch 10 mit folgenden, bevorzugt chronologischen, Verfahrensschritten:
- Bereitstellen (8) des zumindest einen Basisrings (2), wobei der zumindest eine Basisring (2) zumindest ein Metall, bevorzugt zumindest zwei oder zumindest drei oder mehrere Metalle, aufweist oder daraus besteht, wobei eine Verzahnung (4) an einer Innenmantelfläche (5) des zumindest einen Basisrings (2) angeordnet ist und mit dem verzahnten Werkstück in Kontakt bringbar ist,
- Bereitstellen (9) des zumindest einen Schleifmittels (3),
- Belegen (10), bevorzugt galvanisches Belegen, der Verzahnung (4) des zumindest einen Basisrings (2) mit dem zumindest einen Schleifmittel (3).

12. Verfahren nach Anspruch 10 oder 11, wobei das Bereitstellen (8) des zumindest einen Basisrings (2) zumindest einen, bevorzugt zwei, drei, vier oder mehrere, der folgenden, bevorzugt chronologischen, Verfahrensschritte umfasst:
- Pressen (11), bevorzugt Heißpressen und/oder Kaltverschweißen, des zumindest einen Basisrings (2) aus Metallpulver,
- Sintern (11) des zumindest einen Basisrings (2) aus Metallpulver,
- Zerspanendes Herstellen (11) des zumindest einen Basisrings (2) aus Metallvollmaterial,
- Zerspanendes Bearbeiten (12), bevorzugt Drehen des Außendurchmessers, des Innendurchmessers und/oder zumindest einer der beiden Stirnflächen, des zumindest einen Basisrings (2),
- Einbringen (13) einer Vorverzahnung auf den zumindest einen Basisring (2), bevorzugt mit einer Profilschleifscheibe,
- Abrichten (14) des zumindest einen Basisrings (2), bevorzugt mit einem Abrichtrad, besonders bevorzugt mit Diamantbelegung.

13. Verfahren nach einem der vorangegangenen Ansprüche 10 bis 12 mit zumindest einem der folgenden, bevorzugt chronologischen, Verfahrensschritten:
- Bereitstellen (15) zumindest eines Aufbaurings (6), wobei der zumindest eine Aufbauring (6) zumindest ein Kunstharz aufweist oder daraus besteht,
- Bereitstellen (16) zumindest eines Trägerrings (7) durch Verbinden des zumindest einen Basisrings (2) mit dem zumindest einen Aufbauring (6), bevorzugt wobei der zumindest eine Basisring (2) in radialer Richtung von dem zumindest einen Aufbauring (6) umgeben ist,
- Belegen (17), bevorzugt galvanisches Belegen, des zumindest einen Trägerrings (7), bevorzugt der Verzahnung (4) des zumindest einen Basisrings (2) des zumindest einen Trägerrings (7), mit dem zumindest einen Schleifmittel (3).

14. Verfahren nach einem der vorangegangenen Ansprüche 10 bis 13, wobei das Bereitstellen des zumindest einen Aufbaurings (6) und/oder des Trägerrings (7) zumindest einen, zwei, drei oder alle der folgenden, bevorzugt chronologischen, Verfahrensschritte umfasst:
- Anordnen, bevorzugt Zentrieren, des zumindest einen Basisrings (2) in einer Gussform
- Umgießen des zumindest einen Basisrings (2) in radialer Richtung mit einer Kunstharzmasse,
- Aushärten der Kunstharzmasse zu zumindest einem Aufbauring (6),
- Zerspanendes Bearbeiten (18), bevorzugt Drehen des Außendurchmessers, des Innendurchmessers und/oder zumindest einer der beiden Stirnflächen, des zumindest einen Aufbaurings (6) und/oder des zumindest einen Trägerrings (7).

15. Verfahren zur Oberflächenbearbeitung verzahnter Werkstücke mit einem Honring (1) nach einem der Ansprüche 1 bis 8 oder einer Anordnung nach Anspruch 9, mit folgenden, bevorzugt chronologischen, Verfahrensschritten:
- Einspannen des Honrings (1) in einer Honmaschine,
- Bearbeiten eines verzahnten Werkstücks, bevorzugt eines Zahnrads, besonders bevorzugt eines Getriebezahnrads, mit dem eingespannten Honring (1) in der Honmaschine.
